# EUROPEAN PATENT APPLICATION

(11) **EP 4 230 984 A1**
(43) Date of publication of application: **23.08.2023**
(21) Application number: 23157689.3
(22) Date of filing: 21.02.2023
(51) Int. Cl.: G01M 3/16, G01M 3/04, G01N 27/06

(54) **ELECTRONIC SENSOR FOR THE SELECTIVE DETECTION OF LIQUIDS**

(30) Priority: 21.02.2022 CZ 20220080; 21.02.2022 CZ 202239684 U
(71) Applicant: Univerzita Pardubice, 530 09 Pardubice, Polabiny (CZ); Západoceská univerzita v Plzni, 301 00 Plzen (CZ); Tesla Blatna, a.s., 38801 Blatna (CZ)
(72) Inventor: SYROVY, Tomas, 565 01 Mostek (CZ); BODNAR, Michal, 398 11 Protivin (CZ); OZANAK, Pavol, 398 32 Vraz (CZ); PRETL, Silvan, 326 00 Plzen (CZ); BLECHA, Tomas, 330 33 Pnovany (CZ); CENGERY, Jiri, Zinkovy 335 54 (CZ); BELOHOUBEK, Jan, 332 02 Stary Plzenec (CZ); HAMACEK, Ales, 333 01 Chotesov (CZ); JANDA, Martin, 323 00 Plzen (CZ)
(74) Representative: Sedlák, Jirí

(57) **Abstract**

An electronic sensor (1) for the selective detection of liquids includes at least two sensor elements (2) formed by a printing layer or a deposition layer that contains a polymer matrix and conductive particles from the group of microparticles or nanoparticles of metal or carbon bound in the polymer matrix. Sensor elements (2) are separately arranged on a common carrier substrate (3) and at least one conductive path (4) arranged on a common carrier substrate (3) is brought to each sensor element (2). Each sensor element (2) has a different composition of the printing layer or deposition layer from another sensor element (2) on the common carrier substrate (3), in particular it has a different composition of the polymer matrix. The specific composition of the printing layer or deposition layer of each sensor element has a different sensory response to contact with a liquid selected from the group: water, oils, acids, bases, protic solvents, aprotic solvents, polar solvents, non-polar solvents, alcohols, ketones, aldehydes, and ethers.

## Description

### Field of the Invention

The invention relates to the field of detection of leak of industrial liquids, mainly oils, electrolytes, acids, bases and other liquids hazardous to the environment, specifically to an electronic sensor for the selective detection of liquids and recognition of their leaks as well as the type of leaking liquid.

### Background of the Invention

At present, leak of oils and other industrial liquids is detected by various methods. Leaks and spills of oils or other industrial liquids are major problems in industry and in everyday life. It is therefore necessary to prevent these events, preferably in the state of symptoms of impending fault or immediately after the fault or emergency condition. In addition to the detection of the substance itself, the leak of which is expected in a certain place or operation, it is very important to recognize its nature quickly in the field, even in the event of an accident and leak of an unknown liquid. In particular in relation to oils, petroleum products, acids, bases, protic or aprotic solvents, electrolytes, etc. This could be an appropriate rapid intervention before a precise analysis of the given liquid is carried out. Currently, a number of solutions are developed for the detection of leak of specific liquids, in particular oils, water, etc.

Cable sensors equipped with insulating material capable of interacting with the detected liquid have been used extensively to detect leaks of petroleum products and oils. In WO 2017/213381 A1, such material interacts with the detected liquid through absorption or dissolution. As a result, there is a detectable change in the electrical resistance between the sensing wires. Such an arrangement is in the stage of commercial implementation. These sensors are often of the nature of a cable or thick fibre with a diameter in the order of mm. Another approach involves optical sensors based on the evaluation of the refractive index of the liquid present. Float sensors or vibration sensors are also used to detect leaks of petroleum products and oils, whereby the presence of liquid is indicated by a change in resonance frequency. These sensors generally respond to the presence of any liquid and therefore, for the purposes of clarification, they are further combined with a conductivity sensor to distinguish conductive liquids such as water from non-conductive liquids such as oils. However, a completely selective detection of only oils versus other non-conductive types of liquids cannot be achieved. Another disadvantage of such a solution is that the aforementioned electronic sensors are not available in a sufficiently thin and mechanically flexible design, which is required for their direct application in narrow spaces, openings and cavities typical, for example, for structural elements of transport vehicles and machinery, pipelines and liquid distributions.

Other documents describe sensors for the detection of oils and other liquids based on the principle of electrically conductive layers whose electrical function is, for example, impaired by the presence of a liquid. These are in particular documents KR 101467200 B1, JP 5904386 B2, WO 2019/046961 A1, KR 102205502 B1. These sensors are based on mixtures of conductive particles and suitable polymers that are dissolved in liquids. The disadvantage of such a solution is in particular the non-selective detection of the presence of various types of liquids, as well as the impossibility of applying directly the electronic sensor without a carrier substrate to various surfaces such as 2D, structured 2.5D or 3D surfaces.

Patent CZ 308 247 B6 describes a linear sensor system that includes a sensor that responds to the penetration of liquid by changing its surface resistance. The sensor is formed as a conductive printing layer including a non-conductive polymer matrix, which includes conductive microparticles or nanoparticles of metal or carbon, while their concentration is higher than the percolation threshold. The disadvantage of such a solution is that the system is not able to detect the type of liquid, since a change in the electrical resistance is used to detect the penetration of liquid, where the conductive printing layer of the sensor is dissolved in the case of the presence of any liquid capable of disrupting the non-conductive polymer matrix. Indeed, that is a disadvantage in the essence of all known sensor solutions based on soluble detection elements.

The object of the invention is therefore to prepare such an electronic sensor for the selective detection of liquids, which would provide for the option to detect the leak of several types of liquids and would detect the specific type of oils, acids, bases, solvents and other process liquids. Another object of the invention is to prepare such an electronic sensor for the selective detection of liquids, which would allow the production in a thin form to the micrometre scale and which could be applied both to a flexible polymer substrate and to a fibrous porous substrate such as paper, textile or non-woven fabric. Another object of the invention is to prepare such an electronic sensor for the selective detection of liquids, which could be prepared in any length or surface dimensions, which would allow the creation of closed sensor loops around various objects, structures, production equipment, pipelines or reservoirs. Another object of the invention is to prepare such an electronic sensor for the selective detection of liquids, which could be printed on any surface, including planar 2D, structured 2.5D or 3D surfaces, which will allow the creation of electronic sensors directly on components of parts, bodywork or other parts of equipment, vehicles or objects.

### Disclosure of the Invention

The object is achieved by an electronic sensor for the selective detection of liquids including at least two sensor elements. The sensor elements are formed by the printing layer or deposition layer containing a polymer matrix and conductive particles from the group of microparticles or nanoparticles of metal or carbon bound in the polymer matrix. It is the subject matter of the invention that the sensor elements are arranged separately on a common carrier substrate. And further, at least one conductive path arranged on a common carrier substrate is brought to each sensor element. Each sensor element has a different composition of the printing layer or deposition layer from other sensor elements on a common carrier substrate, in particular it has a different composition of the polymer matrix. The specific composition of the printing layer or deposition layer of each sensor element has a different sensory response to contact with a liquid selected from the group: water, oils, acids, bases, protic solvents, aprotic solvents, polar solvents, non-polar solvents, alcohols, ketones, aldehydes, ethers, etc. Such a solution provides for the option to selectively detect the leak of different types of liquids, while the layers can be applied to a common carrier substrate in a thin layer, in particular in the order of nanometres to units of mm, or can be applied directly to the selected surface. The given sensor elements can then be applied to less accessible parts of equipment, vehicles or other parts. Sensor elements on thin flexible carriers can be easily wrapped around objects, conformally placed in spaces complex in shape such as corners, depressions, openings, etc., or inserted into narrow spaces. In direct printing, printing layers can be applied to the surface of selected elements, which in the final arrangement form an assembly complex in shape, in which it would otherwise be difficult or impossible to place a sensor on a separate carrier after its assembly.

For the purposes of describing this invention, the term "sensor element" refers to the implementation of a sensitive layer in a defined geometry.

In a preferred embodiment, the total thickness of the electronic sensor is in the range from 20 nm to 3000 µm. Such a thickness is achieved through the selected printing or coating technique, which allows electronic sensors to be prepared in any length or surface dimensions. It also ensures the possibility of placing, or directly printing or applying the electronic sensor in confined, hard-to-reach spaces such as engines, cavities in bodywork and other components in cars or other means of transport and work machines, or in various devices, structures, infrastructure elements and installations where liquid leak detection is needed.

In another preferred embodiment, the common carrier substrate is a non-absorbent substrate, which can be in the form of a planar film or a 3D surface, or an absorbent substrate or a porous 3D surface.

In another preferred embodiment, the conductive paths of the sensor elements are formed by layers of conductive printing formulations based on metals or carbon materials with non-conductive or conductive polymers.

In a preferred embodiment, the electrical conductivity of the conductive paths is higher than 100 S/cm. In another preferred embodiment, the electrical conductivity of the conductive paths is higher than 1 S/cm when using larger thickness of printing layers or deposition layers.

In another preferred embodiment, at least some of the sensor elements and conductive paths on the common carrier substrate are covered with a protective layer, with the exception of detection parts of the sensor elements. The purpose of such an arrangement is to protect the conductive paths from degradation, in particular due to the ambient conditions. In the case of the presence of liquid, the integrity of the sensory layer will be lost, which will be indicated by a change in the electrical response of the sensor element of the given electronic sensor.

The polymer matrix of the sensor element is preferably soluble in the selected group of liquids such as water, oils, acids, bases, protic solvents, aprotic solvents, polar solvents, non-polar solvents, alcohols, ketones, aldehydes or ethers, and is made of materials selected in particular from the following group:
a) For the detection of water: hydroxyethyl cellulose, hydroxypropyl cellulose, polyacrylamide, sodium polyacrylate, poly(N-vinyl imidazole), poly(N-isopropylacrylamide), carboxymethyl cellulose, poly(ethylene glycol), xanthan gum, sodium alginate, polysaccharides, poly(vinyl alcohol); poly(3,4-ethylenedioxythiophene) doped with polystyrene sulfonate (PEDOT:PSS), polyaniline doped with hydrochloric acid (PANI:HCl), polypyrrole doped with hydrochloric acid (PPY:HCl);
b) For the detection of alcohols: poly(2-hydroxyethyl methacrylate), poly(2-propyl acrylate), poly(2-vinyl pyridine), poly(4-vinyl pyridine), poly(vinyl phenol), polyvinylpyrrolidone, copolymers of polyvinylpyrrolidone, poly(N-vinyl imidazole), poly(4-vinyl benzoate), polypropylene glycol, ethyl cellulose, methyl cellulose, nitrocellulose;
c) For the detection of ketones, ethers: polyvinyl chloride (PVC), poly(styrene), poly(naphthalene), polyethylene vinyl acetate (PEVA), polymethyl methacrylate, poly(methyl acrylate) (PMMA), poly(glycidyl methacrylate), poly(1-vinyl anthracene), poly(2-vinyl pyridine), poly(4-vinyl pyridine), poly(vinyl benzyl chloride), polylactic acid (PLA), polycaprolactone, polycarbonate, poly(N-vinyl carbazole);
d) For the detection of non-polar solvents and oils: poly(styrene), copolymers of poly(styrene), poly(naphthalene), polymethyl methacrylate, poly(methyl acrylate) (PMMA), polyvinylidene chloride (PVDC), poly(N-vinyl carbazole), poly(vinyl acetate) , polycaprolactone, ethyl cellulose, alkyds, waxes, polyisobutylene;
e) For the detection of aprotic solvents: poly(styrene), copolymers of poly(styrene), poly(naphthalene), polymethyl methacrylate, poly(methyl acrylate) (PMMA), polyvinylidene chloride (PVDC), poly(N-vinyl carbazole), poly(vinyl acetate), polycaprolactone, polyvinylidene fluoride (PVDF), poly(urethanes), polyaniline (PANI).

In a preferred embodiment, the electronic sensor contains at least two sensor elements formed by a printed electrically conductive layer or a deposited electrically conductive layer containing a polymer matrix, while the conductive particles in the polymer matrix are in the concentration higher than the percolation threshold, which causes an increase in electrical resistance or impedance in the case of contact of the electronic sensor with a suitable liquid, even by several orders of magnitude; however, the increase is lower when using a conductive polymer matrix.

In another preferred embodiment, the electronic sensor contains at least two sensor elements formed by a printed electrically non-conductive layer or a deposited electrically non-conductive layer containing a polymer matrix, while the conductive particles in the polymer matrix are in the concentration lower than the percolation threshold. In such a case, there is a reduction in electrical resistance or impedance when the electronic sensor comes in contact with a suitable liquid, which disrupts the polymer matrix and, together with conductive particles, allows the passage of electric current. Suitable liquids include, for example, electrolytes, or in general solutions of ionic compounds, which, due to ionic conductivity, allow the passage of electric current through the detection part of the sensor.

In addition the subject matter of the invention is the specific method of evaluating the detection of liquids through the electronic sensor created according to the present invention, when the electronic sensor is exposed to the liquid and subsequently the change in the electrical resistance of all sensor elements is evaluated, determining the type of liquid on the basis of the change in the electrical resistance of the specific sensor element or on the basis of the overall combination of changes in the electrical resistance of all sensor elements.

In another preferred embodiment of the method of evaluating the detection of liquids through the electronic sensor created according to the present invention, the electronic sensor is exposed to the liquid and subsequently the change in the electrical conductivity of all sensor elements is evaluated, determining the type of liquid on the basis of the change in the electrical conductivity of the specific sensor element or on the basis of the overall combination of changes in the electrical conductivity of all sensor elements.

In another preferred embodiment of the method of evaluating the detection of liquids through the electronic sensor created according to the present invention, the electronic sensor is exposed to the liquid and subsequently the change in the frequency impedance characteristic that occurs in the presence of the liquid is evaluated. Such an evaluation is conditioned by physical and chemical changes in the case of contact of the liquid and the polymer matrix, when the structure of the electrically conductive printing layer or the electrically conductive deposition layer is disrupted. Such an evaluation provides for the option to unambiguously determine the class of liquids in the case of higher degree of optimization. It also provides for the specific determination of individual liquids in the case of using a deeper analysis through impedance spectroscopy, or monitoring of the kinetics of the change of electrical quantities.

The main advantage of the electronic sensor of the present invention is, in particular, that it allows to detect the leak of several types of liquids, not only oils, acids, bases, water, etc., and at the same time recognize the specific type of detected liquid. The electronic sensor of the present invention further provides an advantage in the preparation of sensors through the printing or deposition techniques allowing the implementation of functional layers with a very small thickness in the order of tens of nanometres to units of mm. This makes it possible to achieve a very thin design of sensors both on flexible polymer substrates, which can also prevent further leak of liquids, and on fibrous and porous substrates such as paper, textiles, non-woven fabrics. In addition to the given 2D and 2.5D substrates, the sensor can be prepared by printing or applying it to any rigid 3D object or part. Another advantage of the electronic sensor of the present invention is that preparing it by printing or deposition technique allows to prepare sensors in any length, surface dimensions, and 3D shapes, which will allow to create, for example, closed sensor loops around various structural elements, distribution systems, production equipment or reservoirs.

In terms of printing techniques, offset printing, screen printing, intaglio printing, flexography, inkjet printing, risography, microdispensing, aerosol jet printing, thermotransfer, tampon printing, etc. can be used for the preparation by printing on planar 2D and 2.5D surfaces. In terms of deposition techniques, spraying, slot deposition, immersion, spin-coating can be used. To prepare the sensors for the 3D surface, printing techniques such as screen printing, flexography, inkjet printing, microdispensing, aerosol jet printing, thermotransfer, tampon printing, etc., or deposition techniques such as spraying, slot deposition, immersion, spin-coating, as well as 3D printing in its various implementations such as fused deposition modelling (FDM) or selective laser sintering (SLS) can be used.

### Brief Description of Drawings

The present invention will be explained in detail by means of the following figures where:
- Fig. 1: shows a schematic of an electronic sensor, containing printed sensor elements A-D that respond to different types of liquids,
- Fig. 2: shows a sensory response in terms of the change in the electrical resistance of the individual sensor elements of the electronic sensor as shown in Fig. 1 when they come in contact with the given types of liquids (white: no or insignificant change in resistance, black: significant change in resistance),
- Fig. 3: shows a schematic of an electronic sensor, containing printed sensor elements A-H that respond to different types of liquids,
- Fig. 4: shows an electronic sensor with two sensor elements printed on the 3D surface,
- Fig. 5: shows an electronic sensor with two sensor elements printed on the 3D surface with a protective layer defining a reservoir for liquid around the sensor elements.

### Preferred embodiments of the Invention

### Example 1

The sensor element 2 showing the change in the electrical resistance when it comes in contact with hydraulic oil and the selected type of aprotic solvent 1 was prepared with the use of the printing process. The printing formulation was prepared that consisted of 25 wt% of graphite, 5 wt% of carbon black and 15 wt% of non-polar copolymer dissolved in non-polar solvent. Active layers of sensor element 2 with a width of 5 mm and a length of 70 mm were printed through the screen-printing technique. These were subsequently dried at 90°C for 15 minutes. In the selected liquid sensitivity test, droplets of 100 µl of hydraulic oil, water, aprotic solvent 1, aprotic solvent 2 and ethanol were placed with a micrometric pipette on the separate sensor elements 2. The change in the electrical resistance expressed as the ratio R/RO was then 1921; 1; 84; 1; 1 for the given liquids after 5 minutes after application of the liquid. The results show that the sensor element 2 responded to hydraulic oil by changing the resistance by more than three orders of magnitude and to aprotic solvent 1 by changing the resistance by almost two orders of magnitude.

### Example 2

The sensor element 2 showing the change in the electrical resistance when it comes in contact with water, alcohols or aprotic solvents was prepared with the use of the printing process. The printing formulation was prepared that consisted of 20 wt% of graphite, 6 wt% of carbon black and 15 wt% of water-soluble polymer dissolved in water. Active layers of sensor element 2 with a width of 5 mm and a length of 70 mm were printed through the screen-printing technique. These were subsequently dried at 90°C for 15 minutes. In the selected liquid sensitivity test, droplets of 100 µl of hydraulic oil, water, aprotic solvent 1, aprotic solvent 2 and ethanol were placed with a micrometric pipette on the separate sensor elements 2. The change in the electrical resistance expressed as the ratio R/RO was then 1; 2002; 6244; 3696; 867 for the given liquids after 5 minutes after application of the liquid. The results show that the sensor element 2 responded to a number of used solvents by changing the resistance by more than 2-3 orders of magnitude, on the contrary, it did not respond to the presence of oil.

### Example 3

The sensor element 2 showing the change in the electrical resistance when it comes in contact with water was prepared with the use of the printing process. The printing formulation was prepared that consisted of 25 wt% of graphite, 2 wt% of carbon black and 5 wt% of water-soluble polymer dissolved in water. Active layers of sensor element 2 with a width of 5 mm and a length of 70 mm were printed through the screen-printing technique. These were subsequently dried at 90°C for 15 minutes. In the selected liquid sensitivity test, droplets of 100 µl of hydraulic oil, water, aprotic solvent 1, aprotic solvent 2 and ethanol were placed with a micrometric pipette on the separate sensor elements 2. The change in the electrical resistance expressed as the ratio R/RO was then 1; 2158; 1.4; 1.1; 1 for the given liquids after 5 minutes after application of the liquid. The results show that the sensor element 2 responded significantly only to the presence of water by changing the resistance by more than three orders of magnitude, on the contrary, it did not respond to the presence of oil, aprotic solvents, ethanol.

### Example 4

The sensor element 2 showing the change in the electrical resistance when it comes in contact with the selected type of aprotic solvent 1 was prepared with the use of the printing process. The printing formulation was prepared that consisted of 20 wt% of graphite, 2 wt% of carbon black and 10 wt% of fluorinated polymer dissolved in aprotic solvent. Active layers of sensor element 2 with a width of 5 mm and a length of 70 mm were printed through the screen-printing technique. These were subsequently dried at 110 °C for 20 minutes. In the selected liquid sensitivity test, droplets of 100 µl of hydraulic oil, water, aprotic solvent 1, aprotic solvent 2 and ethanol were placed with a micrometric pipette on the separate sensor elements 2. The change in the electrical resistance expressed as the ratio R/RO was then 1; 1; 16706; 1; 1 for the given liquids after 5 minutes after application of the liquid. The results show that the sensor element 2 responded significantly only to the presence of aprotic solvent 1 by changing the resistance by more than four orders of magnitude, on the contrary, it did not respond to the presence of oil, aprotic solvent 2, ethanol.

### Example 5

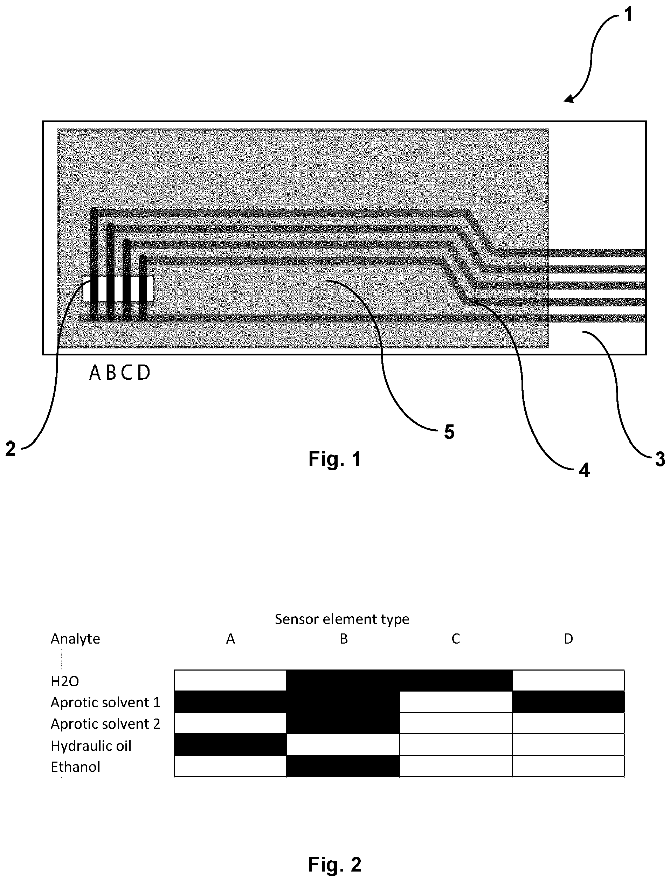

The combined electronic sensor 1 was printed using the printing formulations from Examples 1 to 4, which contained a total of four sensor elements 2 with different active layers on the common carrier substrate 3. Silver composite-based conductive paths 4, shown in Fig. 1, were also printed to these active layers. Subsequently, the combined electronic sensor 1 was overprinted with the protective layer 5 in the form of UV curable dielectrics, which mechanically and chemically protected the silver conductive paths 4 and at the same time defined the active part of the combined electronic sensor 1. The active layers A to D of the sensor elements 2 as shown in Figure 1 had different sensitivities to different liquids as shown in Examples 1 to 4. Depending on the applied liquid, their sensory response in connection with the significant change in the electrical resistance followed the scheme shown in Figure 2, where black indicates the significant change in the electrical resistance, white indicates the insignificant change in the electrical resistance.

### Example 6

The combined electronic sensor 1, which contained three sensor elements 2 with different sensitive layers, was printed on the polypropylene plastic part using the printing formulations from Examples 1 to 3 using the microdispensing or microdosing technique. Due to the programmed x,y,z movement trajectory, microdispensing made it possible to print the given combined electronic sensor 1 on the 3D shape of the plastic part. Silver composite-based conductive paths 4 were also printed to these sensitive layers. Subsequently, the combined electronic sensor 1 was overprinted through the microdispensing with the protective layer 5 by means of UV curable dielectrics, which mechanically and chemically protected the silver conductive paths 4 and at the same time defined the active part of the combined electronic sensor 1. The sensitive layers A to C of the sensor elements 2 had different sensitivities to different liquids as shown in Examples 1 to 3. Depending on the applied liquid, their sensory response in connection with the significant change in the electrical resistance followed the scheme shown in Figure 2, where black indicates the significant change in the electrical resistance, white indicates no change or insignificant change in the electrical resistance.

For the purposes of describing this invention, the term "microdispensing" refers to the technique of implementing doses of liquid medium in volumes smaller than 1 µl.

### Example 7

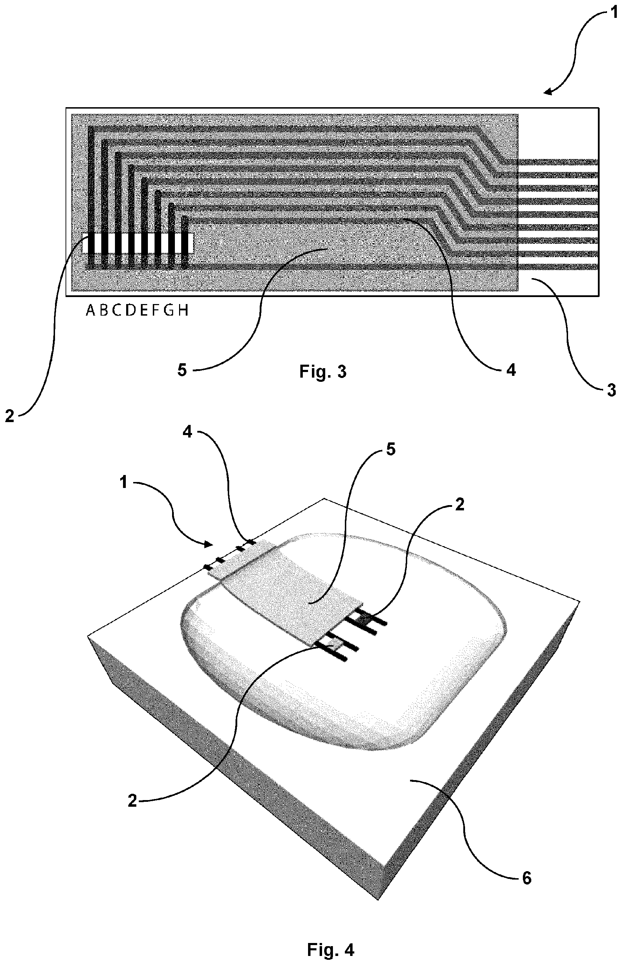

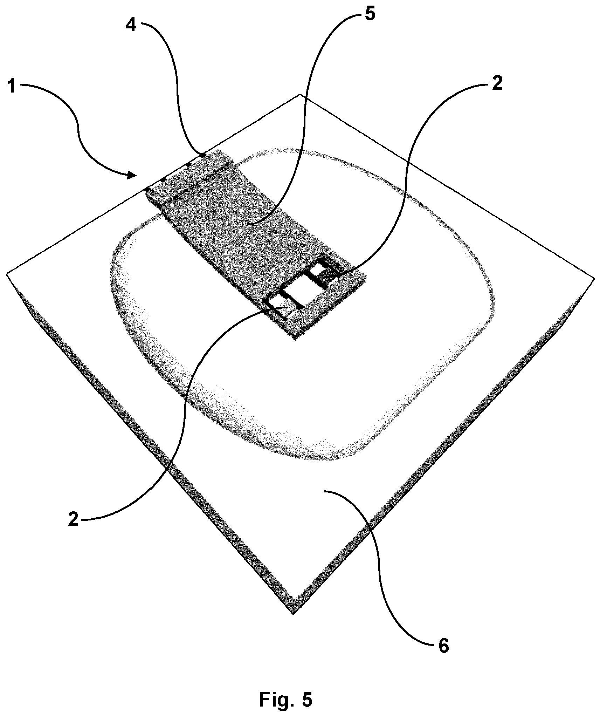

The electronic sensor 1 was printed on the 3D plastic part 6 made of polypropylene copolymer through the 3D FDM printing technique, which is shown in Figure 4 and Figure 5. The given electronic sensor 1 contained two sensor elements 2, responding to different liquids. The first sensor element 2 was used to detect aprotic solvents that are part of electrolytes or part of battery production. The second sensor element 2 was used to detect water. Plasma was applied to the surface of the 3D plastic part 6 to improve adhesion of subsequently printed layers. The printing filament based on polylactide acid (PLA), filled with silver particles, which ensured low electrical resistance, was used to print the contact pads and electrically conductive paths 4. To print the first sensor element 2, the filament was created through extrusion, where a mixture of polystyrene and graphite was homogenized as part of repeated passage through the extruder, where the content of graphite was 10 wt%. The first sensor element 2 was formed by five conductive paths 4 printed close to each other, which formed an object approximately 1 mm wide, 0.2 mm high and 15 mm long. The second sensor element 2 was printed on the basis of the composite of PVA and graphite and carbon black, where the proportion of carbon particles was 12 wt%. The geometry of the second sensor element 2 for the detection of water was similar to that of the first sensor element 2 for the detection of aprotic solvents. The protective layer 5 of PET was printed last, which overlapped the silver conductive paths 4 and both sensor elements 2 made of soluble carbon composites, except for the detection areas of the sensor elements 2.

In the selected liquid sensitivity test, droplets of 100 µl of hydraulic oil, water, aprotic solvent 1 and aprotic solvent 2 and ethanol were placed with a micrometric pipette on the separate sensor elements 2. The change in the electrical resistance of the first sensor element 2 sensitive to aprotic solvents expressed as the ratio R/RO was then 1; 1; 1561; 2340, 1 for the given liquids after 5 minutes after application of the liquid. The change in the electrical resistance of the second sensor element 2 sensitive to water expressed as the ratio R/RO was then 1; 2632; 52; 2, 6 for the given liquids after 5 minutes after application of the liquid.

### Example 8

The sensor element 2 showing the change in the electrical resistance when it comes in contact with hydraulic oil and the selected type of aprotic solvent 1 was prepared with the use of the mask spraying technique. The given sensor element 2 in the form of the sensitive layer was prepared for the inner part of the tray, which shall prevent the oil from leaking into the surroundings in the event of oil leak from the gearbox of the machine. The spraying formulation was prepared that consisted of 15 wt% of graphite, 1 wt% of carbon black and 6 wt% of non-polar copolymer dissolved in non-polar solvents. The self-adhesive mask that was applied along the entire length of the tray, including the walls of the tray to its edge, was used to create first a total of five sensor elements 2 parallel to each other by spraying that were 10 mm wide and 540 mm long. After drying in the hot air dryer at 100°C for 20 minutes, the spraying mask was applied to the silver composite-based contact pads. The mask was subsequently dried under the same conditions as the drying of the sensor element 2. In the selected liquid sensitivity test, droplets of 100 µl of hydraulic oil, water, aprotic solvent 1 and aprotic solvent 2 and ethanol were placed with a micrometric pipette on the separate sensor elements 2. The change in the electrical resistance expressed as the ratio R/RO was then 1423; 1; 51; 1; 1 for the given liquids after 5 minutes after application of the liquid. The results show that the sensor element 2 responded to hydraulic oil by changing the resistance by more than three orders of magnitude and to aprotic solvent 1 by changing the resistance by almost two orders of magnitude.

### Example 9

The sensor element 2 showing the change in the electrical resistance when it comes in contact with the selected type of aprotic solvent 1 was prepared with the use of the printing process. The printing formulation was prepared that consisted of 0.2 wt% of carbon black and 10 wt% of fluorinated polymer dissolved in aprotic solvent. Active layers with a width of 5 mm and a length of 70 mm were printed through the screen-printing technique. These were subsequently dried at 110 °C for 20 minutes. In the selected liquid sensitivity test, droplets of 100 µl of hydraulic oil, water, aprotic solvent 1 with LiClO₄, aprotic solvent 2 with LiClO₄ and ethanol were placed with a micrometric pipette on the separate sensor elements 2. The change in the electrical resistance expressed as the ratio R/RO was then 1; 1; 0.32; 1; 1 for the given liquids after 5 minutes after application of the liquid. The results show that the sensor element 2 only responded to the presence of aprotic solvent 1 with LiClO₄ by changing the resistance by approximately triple decrease, on the contrary, it did not respond to the presence of water, oil, aprotic solvent 2 with LiClO₄, ethanol.

### Example 10

The sensor element 2 showing the change in the electrical resistance when it comes in contact with water and aprotic solvent 1 was prepared with the use of the printing process. The printing formulation was prepared that consisted of 10 wt% of graphite, 3 wt% of carbon black and 3 wt% of the conductive poly(3,4-ethylenedioxythiophene) polystyrene sulfonate (PEDOT:PSS) in water. Active layers of sensor element 2 with a width of 5 mm and a length of 30 mm were printed through the screen-printing technique. These were subsequently dried at 90°C for 15 minutes. In the selected liquid sensitivity test, droplets of 100 µl of hydraulic oil, water, aprotic solvent 1, aprotic solvent 2 and ethanol were placed with a micrometric pipette on the separate sensor elements 2. The change in the electrical resistance expressed as the ratio R/RO was then 1; 2; 1.5; 1; 1 for the given liquids after 5 minutes after application of the liquid. The results show that the sensor element 2 responded to water and aprotic solvent 1 by changing slightly the resistance, on the contrary, it did not respond to the presence of oil.

### Example 11

The preparation for the 3D plastic part 6 was the same as in Example 7, with two sensor elements 2 printed around which a dielectric that forms a mechanical barrier with a height of 2 mm was printed using FDM and PET material. This defined the level at which the amount of liquid leaked into the volume of the 3D plastic part 6 was detected. This made it possible to set the sensitivity of the given electronic sensor 1 to the leak of liquid from the device, and thus, for example, exclude a small leak that could be natural and acceptable for a particular operation of the device.

### Industrial Applicability

The electronic sensor for the selective detection of liquids according to the present invention can be used for the detection of liquid leaks and/or the detection of the type of leaked liquids. The electronic sensor can also be used to detect the contamination of liquids, such as oil leaks into watercourses or reservoirs. The electronic sensor can also be used to detect liquid leaks, when it will be applied to the detection area on the common carrier substrate - soil, watercourse, floor, etc., or it will be placed on any part of the machine, device, vehicle, and/or it will be directly printed on any of the aforementioned surfaces.

### List of reference signs

- 1: electronic sensor
- 2: sensor element
- 3: carrier substrate
- 4: conductive path
- 5: protective layer
- 6: 3D plastic part

## Claims

1. An electronic sensor (1) for the selective detection of liquids including at least two sensor elements (2) formed by a printing layer or a deposition layer containing a polymer matrix and conductive particles from the group of microparticles or nanoparticles of metal or carbon bound in a polymer matrix, **characterized in that** the sensor elements (2) are separately arranged on a common carrier substrate (3) and at least one conductive path (4) arranged on the common carrier substrate (3) is brought to each sensor element (2), when each sensor element (2) has a different composition of the printing layer or deposition layer from another sensor element (2) on the common carrier substrate (3), in particular it has a different composition of the polymer matrix, and has a different sensory response to contact with a liquid selected from the group: water, oils, acids, bases, protic solvents, aprotic solvents, polar solvents, non-polar solvents, alcohols, ketones, aldehydes, ethers.

2. The electronic sensor (1) according to claim 1, **characterized in that** the total thickness of the sensor element (2) is in the range from 20 nm to 3000 µm.

3. The electronic sensor (1) according to claim 1 or 2, **characterized in that** the common carrier substrate (3) is formed by a non-absorbent substrate or an absorbent substrate.

4. The electronic sensor (1) according to claim 1 or 2, **characterized in that** the common carrier substrate (3) is formed by a planar 2D substrate, 2.5D substrate, or 3D substrate.

5. The electronic sensor (1) according to any of claims 1 to 4, **characterized in that** the conductive paths (4) of the sensor elements (2) consist of layers of conductive printing formulations based on metals or carbon materials.

6. The electronic sensor (1) according to claim 5, **characterized in that** the electrical conductivity of the conductive paths (4) is higher than 100 S/cm.

7. The electronic sensor (1) according to claim 5, **characterized in that** the electrical conductivity of the conductive paths (4) is higher than 1 S/cm.

8. The electronic sensor (1) according to any of claims 1 to 7, **characterized in that** at least some sensor elements (2) and conductive paths (4) on the common carrier substrate (3) are covered with a protective layer (5), with the exception of detection parts of the sensor elements (2).

9. The electronic sensor (1) according to any of claims 1 to 8, **characterized in that** the polymer matrix is soluble in the liquid from the group: water, oils, acids, bases, protic solvents, aprotic solvents, polar solvents, non-polar solvents, alcohols, ketones, aldehydes, ethers.

10. The electronic sensor (1) according to any of claims 1 to 9, **characterized in that** the polymer matrix is formed by a substance/monomer selected from the group: hydroxyethyl cellulose, hydroxypropyl cellulose, polyacrylamide, sodium polyacrylate, poly(N-vinyl imidazole), poly(N-isopropylacrylamide), carboxymethyl cellulose, poly(ethylene glycol), xanthan gum, sodium alginate, polysaccharides, poly(vinyl alcohol), poly(2-hydroxyethyl methacrylate), poly(2-propyl acrylate), poly(2-vinyl pyridine), poly(4-vinyl pyridine), poly(vinyl phenol), polyvinylpyrrolidone, copolymers of polyvinylpyrrolidone, poly(N-vinyl imidazole), poly(4-vinyl benzoate), polypropylene glycol, ethyl cellulose, methyl cellulose, nitrocellulose, PVC, poly(styrene), poly(naphthalene), PEVA, PMMA, poly(methyl acrylate), poly(glycidyl methacrylate), poly(1-vinyl anthracene), poly(2-vinyl pyridine), poly(4-vinyl pyridine), poly(vinyl benzyl chloride), PLA, polycaprolactone, polycarbonate, poly(N-vinyl carbazole), poly(styrene), copolymers of poly(styrene), poly(naphthalene), PMMA, poly(methyl acrylate), PVDC, poly(N-vinyl carbazole), poly(vinyl acetate), polycaprolactone, ethyl cellulose, alkyds, waxes, polyisobutylene, PEDOT, PANI, PPY.

11. The electronic sensor (1) according to any of claims 1 to 10, **characterized in that** it contains at least two sensor elements (2) formed by the printed electrically conductive layer or the deposited electrically conductive layer containing the polymer matrix and conductive particles that are in the polymer matrix in the concentration higher than the percolation threshold.

12. The electronic sensor (1) according to any of claims 1 to 10, **characterized in that** it contains at least two sensor elements (2) formed by the printed electrically non-conductive layer or the deposited electrically non-conductive layer containing the polymer matrix and conductive particles that are in the polymer matrix in the concentration lower than the percolation threshold.

13. A method of evaluating the detection of liquids through the electronic sensor (1) created according to any of claims 1 to 12, **characterized in that** the electronic sensor (1) is exposed to the liquid and subsequently the change in the electrical resistance of all sensor elements (2) is evaluated, determining the type of liquid on the basis of the change in the electrical resistance of the specific sensor element (2) or on the basis of the overall combination of changes in the electrical resistance of all sensor elements (2).

14. A method of evaluating the detection of liquids through the electronic sensor (1) created according to any of claims 1 to 12, **characterized in that** the change in the electrical conductivity of all sensor elements (2) is evaluated, determining the type of liquid on the basis of the change in the electrical conductivity of the specific sensor element (2) or on the basis of the overall combination of changes in the electrical conductivity of all sensor elements (2).

15. The method of evaluating the detection of liquids through the electronic sensor (1) created according to any of claims 1 to 12, **characterized in that** the change in the impedance of all sensor elements (2) or its frequency dependence is evaluated, determining the type of liquid on the basis of the change in the impedance or its frequency dependence of the specific sensor element (2) or on the basis of the overall combination of changes in the impedance or frequency dependence of impedance of all sensor elements (2).
